# EUROPEAN PATENT SPECIFICATION

(11) **EP 3 722 044 B1**
(45) Date of publication and mention of the grant of the patent: **03.01.2024**
(21) Application number: 20163853.3
(22) Date of filing: 18.03.2020
(51) Int. Cl.: B26F 3/12, B26F 3/06, B26F 1/38, B26D 5/00, B23K 26/08, B23K 103/00, B23K 26/38

(54) **AUTOMATIC CUTTING OF SHAPES FROM SHEET MATERIAL**
AUTOMATISCHES SCHNEIDEN VON FORMEN AUS BLATTMATERIAL
DÉCOUPE AUTOMATIQUE DE FORMES À PARTIR D'UN MATÉRIAU EN FEUILLE

(30) Priority: 08.04.2019 GB 201904937
(43) Date of publication of application: 14.10.2020
(73) Proprietor: CadCam Technology Limited, Nottingham NG2 3DE (GB); SUMMA NV, 8470 Gistel (BE)
(72) Inventor: WHITE, David Michael, Nottingham NG2 3DE (GB); LAW, Roger Desmond, Nottingham NG2 3DE (GB); MOONEY, Robert William, Nottingham NG2 3DE (GB); DÍAZ DÍAZ, Simeón Michael, Nottingham NG2 3DE (GB)
(74) Representative: Serjeants LLP

(56) References cited:
- US-A- 5 614 115
- Golden Laser: "Laser cutting printed textiles and fabrics - Contour Cut Vision - Golden Laser", , 20 December 2013 (2013-12-20), page 1, XP054980407, Retrieved from the Internet: URL:https://www.youtube.com/watch?v=ln_Raf ksg0c [retrieved on 2020-04-24]

## Description

### Technical Field

The invention relates to the automatic cutting of shapes from sheet material and provides a method of programming and operating a numerically controlled cutting machine, to cut out shapes pre-printed onto the sheet material. The cutting machine may be any machine which has a numerically controlled cutting head, for example a laser cutter, a hot knife cutter, a water jet cutter, a hot air jet cutter or a milling cutter, although the invention is particularly suited to laser cutters. The invention also includes such cutting machines when organized and programmed according to the invention.

In the following description, the invention will be described principally by reference to numerically controlled laser cutters, but it must be understood that this is by way of example, and that all other types of cutting machines are included within the scope of the invention, as long as they are under numerical control and suited for the cutting out of shapes from sheet material.

The pre-printed sheet material to be cut according to the invention may be flexible, such as a fabric, textile or flexible thermoplastic sheet, or may be a rigid or semi-rigid board material such as cardboard. Examples of flexible sheet materials that may be cut according to the invention are rolls of pre-printed textile materials suitable for use in flag, banner, clothing or footwear manufacture, real or simulated leathers, and rolls of vinyl sheet. All such flexible sheet materials are commonly cut into separate pieces for assembly into clothing, footwear, flags or banners (although that list of end uses is by no means a comprehensive list).

The sheet material may have a plain, self-coloured or printed background, but it is a feature of the invention that cutting shape outlines and/or location marks are pre-printed on the sheet materials, and that the cutting machine follows those cutting shape outlines and/or location marks to cut through the sheet material to create the final cut shapes. Other features that may be printed on the sheet material may be decorative, such as pictures, or informative, such as text, or both. If the sheet material has closed loop shape outlines pre-printed thereon then the final cut pieces are pieces which are cut out closely following those closed loop shapes in outline and location. If the sheet material has location marks pre-printed thereon then any cutting command data pre-programmed into the machine is modified to align it and maintain it in close alignment with the location marks and thus with other patterns or features pre-printed on the sheet material.

### Technical Background

US-A-5614115 discloses one known laser cutter for cutting out shapes from sheet material. The sheet material is passed over a support roller onto which a collimated laser beam is focussed, and by controlling the lateral movement of a laser cutting head together with the forward and rearward movement of the sheet material, the shape outline is cut from the sheet. Historically the sheet material had been marked with location marks on a border of the sheet to enable the shapes to be cut from an intended location on the sheet material, and the shapes themselves had been pre-programmed into the laser cutter control program as cutting command data, but US-A-5614115 added the improvement that the shapes could be printed directly onto the sheet material and the laser cutter could be programmed to detect those pre-printed shapes and to derive cutting command data to control the cutting head to follow the pre-printed shapes, eliminating the need for border-printed location marks. The camera/laser cutter combination of US-A-5614115, forming the basis for the preambles of claims 1 and 7, operates in a cycle of three consecutive modes. In a first, data capture, mode the sheet material is passed over the same support roller with the laser beam turned OFF, and a camera or other optical recognition device mounted on the same movable head that mounts the laser cutting head is used to scan the sheet material as the sheet material is moved progressively over the support roller, and to identify the shape outlines printed on the sheet material. That optical recognition device is then turned OFF and the sheet material is drawn back over the support roller to its start position, while in a second, data processing, mode the shape identification data captured is processed to create cutting command data for the laser cutter. In a third, cutting, mode the laser beam is turned ON and the cutting command data is used to control both the lateral movement of the laser cutting head and the forward and rearward movement of the sheet material over the support roller, to cause the laser to cut the desired outline from the sheet material.

US-A-9868302 discloses a laser cutting machine which cuts a continuous fabric into pieces for stitching together to make clothing. In that machine all the data to identify the shapes to be cut is pre-programmed into the laser cutting machine together with printing command data, and as plain unprinted fabric is unrolled from a fabric roll it passes first through a printer where the fabric is printed with cutting and garment assembly data, optionally together with a decorative pattern. The fabric then passes to a laser cutting area where the shapes are cut out. The printing ink used for the cutting and garment assembly data is a fluorescent ink which is invisible to the human eye under normal lighting conditions, but which can be seen by the human eye or by a camera under ultraviolet light. UV-responsive image sensors downstream of the laser cutter monitor the process and can control the laser cutter, but the basic cutting command data is already pre-programmed into the machine for the initial printing stage, and the shapes have been cut before the fabric reaches the UV-responsive image sensors.

An almost identical concept is disclosed in WO-A-2019/012566, which uses a similar combined printing and cutting machine. The initially plain fabric is printed with pre-programmed shapes and other potentially useful information using ink which is substantially invisible to the human eye. After printing the fabric with those shapes to be cut and other potentially useful information, the fabric is unrolled further to pass to the cutting part of the machine where the shapes to be made up into garments are cut out. As with US-A-9868302, the shapes to be cut are pre-programmed into the machine together with the printing command data. As with US-A-9868302, UV-cameras downstream of the cutter section are responsive to the data printed on the fabric and retrieve information therefrom, and that information is used to control the cutting and potential further treatment of the fabric. As with US-A-9868302, however, the cameras scan the fabric only after the shapes have been cut.

Concepts common to both US-A-9868302 and WO-A-2019/012566 are that the shapes to be cut from the fabric are printed as part of the same machine that cuts out those shapes, and that the UV-responsive cameras or sensors are located downstream of the cutting area. That location of the cameras or sensors means that their use is very limited in the control of the laser cutter, effectively being limited to stopping the machine if the fabric is wrongly positioned on the cutting table. That is not a problem however in the context of the general disclosure of the use of those combined printing and cutting machines, because the accurate shapes to be cut from the fabric are already present in the control computer as pre-programmed data.

The Chinese company Golden Laser Co Ltd has developed a laser cutter for cutting out shapes from printed fabrics. The laser is controlled by cutting command data, and as with US-A-9868302 and WO-A-2019/012566 that cutting command data is preinstalled into the laser cutter machine to match and follow the designs printed onto the fabric. As with US-A-9868302 and WO-A-2019/012566, the laser cutter developed by Golden Laser Co Ltd is suitable for use in close proximity to a printer that is used to print the designs onto the fabric, so that the same vector data can be used both to control the print head of the printer and the laser head of the laser cutter. It is necessary, however, for the operator to align the cutting command vector data with the pattern printed onto the fabric before cutting can commence, or the cut shapes would potentially be offset from the printed shapes. That alignment is a manual task which must be carried out before the machine cuts the fabric. It is carried out by aligning, on a computer screen, images of the printed fabric and of the cutting command data. Typically the printed fabric would have printed location marks printed thereon in addition to the printed pattern. Those marks could be at any position on the fabric: on the border, or between adjacent shapes to be cut out from the fabric by the laser cutter, or even within the cut shapes themselves. The image representing the cutting command data on the computer screen would include identical location marks. If there is any elasticity in the fabric then the pattern printed on the fabric may be distorted when the fabric passes to the cutting bed of the cutting machine, and to compensate for that distortion the cutting action of the laser cutter must be periodically stopped whenever the operator notices that the cut shapes no longer follow the pattern printed onto the fabric, to allow for realignment of the cutting command data and the printed patterns on the distorted fabric.

The present invention aims to create an improved laser cutting machine which does not require periodic pauses in the cutting action to achieve the necessary alignment between the cut lines and the printed patterns on the fabric. The ability to operate the machine continuously, without pauses in the cutting action, significantly improves throughput, which is an important consideration for users. The machine according to the invention may utilize cutting command data pre-programmed into the machine, as does the machine marketed by Golden Laser Co Ltd and as do the machines disclosed in US-A-9868302 and WO-A-2019/012566, but a preferred variant of the machine according to the invention does not require such pre-programmed cutting command data in order to cut specific and accurate shapes from a roll of sheet material, and does not have to operate intermittently as do the Golden Laser Co Ltd machine and the machine of our own US-A-5614115. The invention also provides a method of programming and operating such a machine.

### Summary of the Disclosure

The invention provides a method of operating a numerically controlled cutting machine as defined in claim 1. The invention also provides a numerically controlled cutting machine according to claim 7.

The machine of the invention is preferably a laser cutting machine which automatically cuts shapes from a plain or patterned sheet material, cutting outlines which are already printed on the sheet material. The sheet material may be, for example, a pre-printed fabric or vinyl sheet drawn from a roll, or a rigid or semi-rigid sheet material such as cardboard fed from a stack.

The means for obtaining the cutting data does not rely on cutting command data and alignment data pre-programmed into the machine. If the sheet material has pre-printed thereon continuous line data in closed loop shapes defining the individual shapes to be cut out from the sheet material, then when a new batch of material is initially fed to the machine, there is no requirement to pre-load cutting command data to control the cutter head and to tell it what outlines are to be cut from the sheet material as it passes over the cutting table. Neither is there any requirement to align the sheet material with cutting command data before cutting starts. All cutting command data is, according to the invention, obtained entirely from the outline or outlines printed on the sheet material as read by the one or more cameras or optical sensors and then interpreted as the sheet material passes through the cutting command computing zone on its way to the cutting table. That shape outline or those shape outlines printed onto the sheet material may have been printed at a different geographical location and perhaps some considerable time before the sheet material is fed to the cutting machine. The one or more cameras or optical sensors of the cutting machine of the invention is or are located upstream of the cutting table and focussed on the sheet material to detect cut shape outlines already printed on the sheet material. The one or more cameras or optical sensors feed their collected image data to a controller which, if a plurality of cameras or optical sensors is used, stitches together the image data from those cameras or optical sensors and which optionally uses image enhancement algorithms to develop reliable cutting command data which faithfully analyses the shapes pre-printed on the sheet material. The pre-printing of those shapes may use any suitable ink or print medium that can be detected by the camera or cameras, including ordinary printing ink of any colour or fluorescent ink as taught in US-A-9868302 or WO-A-2019/012566. Preferably however a high contrast between the lines defining the outline shape to be cut and the surrounding background is desirable. The means for obtaining the cutting command data should, if the sheet material includes pre-printed decorative patterns, be capable of distinguishing between those decorative patterns and continuous lines which define the shape outlines, but that would be a relatively straightforward shape recognition aspect of the control program processing the data detected by the one or more cameras or optical sensors.

One outstanding advantage of the machine of the invention is that cutting can run continuously, unlike the machine of our US-A-5614115 which required a pause between the scanning phase and the cutting phase while the direction of movement of the fabric was reversed and cutting command data was generated. No reversal of the direction of movement of the sheet material is involved when operating the method of the invention, so no strengthening backing material is required to hold the sheet material flat as the feed direction is reversed. Even the Golden Laser Co Ltd machine requires a pause of up to five seconds for the manual alignment of the pre-programmed cutting command data and the fabric position on the cutting table, before cutting can commence. During that pause there can be no cutting by the laser, and the same pause must be repeated each time the operator observes that the fabric has moved out of alignment with the cutting pattern, or every time a new section of an elastically deformable fabric is moved onto the cutting table. Using the machine of the invention the cutting command data is created on the fly, as the fabric or other sheet material advances from the detection zone, over which the one or more cameras or optical sensors is or are focussed, through the cutting command calculating zone and to the cutting table. No location marks are required on the borders of or elsewhere on the sheet material as in most laser cutters, because the cutting command data identifies the actual lines printed on the sheet material where the cuts have to be directed. Most importantly, the machine according to the invention cuts continuously with no interruption of the cutting action because the calculation of the modified cutting command data is achieved while the sheet material is in the cutting command computing zone between the one or more cameras or optical sensors and the cutting table. Moreover, the machine according to the invention can cut any printed shape from any sheet material with no pre-programming of the cutting head being required other than potentially a control to respond to the thickness and nature of the material itself. That is something that can be entered into the machine by an operator whenever a new roll or reservoir of pre-printed sheet material is loaded into the machine, and the operator does not need to know the nature of the outline shapes printed onto that sheet material. He or she needs to know only the thickness and nature of the material itself. One possible means of avoiding even this small element of operator control is for command instructions for the energy level of the laser beam to be printed on the sheet material itself, possibly on a border of the sheet material beyond the cutting zone.

The detection, in the data processing step, of the closed loop shapes printed on the sheet material may comprise ignoring any closed loop shapes contained within the boundaries of other larger closed loop shapes, or alternatively may comprise identifying closed loop shapes even when they are contained within the boundaries of other larger closed loop shapes. For example, if the sheet material being presented to the machine for cutting is sheet material for banners or point-of-sale displays, it may contain printed letters or numbers within the closed loop shapes to be cut out, and it would be undesirable for the data processing step to provide cutting command data to cut around those letters or numbers which are intended to be retained simply as printed information on the final cut-out shapes. Alternatively, if the sheet material is fabric printed with clothing design outline shapes, it may (or may not) be desirable for the cutting head to cut out shapes from within the identified clothing design closed loop outline shapes, to create cut-out portions in the individual cut clothing panels. The choice between cutting and ignoring closed loop shapes printed on the sheet material wholly within other larger closed loop shapes is a selection that is conveniently under the control of an operator of the machine who is able to switch between those two alternative shape identification modes depending on the nature of the job in hand. Alternatively, it may be an automatic selection in response to a command code printed on the sheet material, for example at a border portion beyond the cutting zone, so that the operator need not know the final use intended for the sheet material being cut.

### Brief Description of the Drawings

Figure 1 is a schematic plan view of a laser cutting machine made and sold by Golden Laser Co Ltd, cutting simple rectangles from a fabric;
Figure 2 is a schematic illustration of a computer screen viewable by a machine operator to show and correct the misalignment between the rectangles and alignment data pre-printed on the fabric in Figure 1 and the cutting command data and alignment data pre-programmed into that machine;
Figure 3 is a schematic plan view of a laser cutting machine according to the invention, showing in greatly exaggerated manner the distortion of an elastically deformable fabric passing through the machine;
Figure 4 is a schematic plan view of a laser cutting machine according to the invention, cutting more complicated shapes from a fabric;
Figure 5 is a schematic section taken along the line A-A of Figure 4; and
Figure 6 is a schematic illustration of a galvo mirror cutting head mounting for a laser cutting machine according to the invention.

### Detailed Description of Embodiments

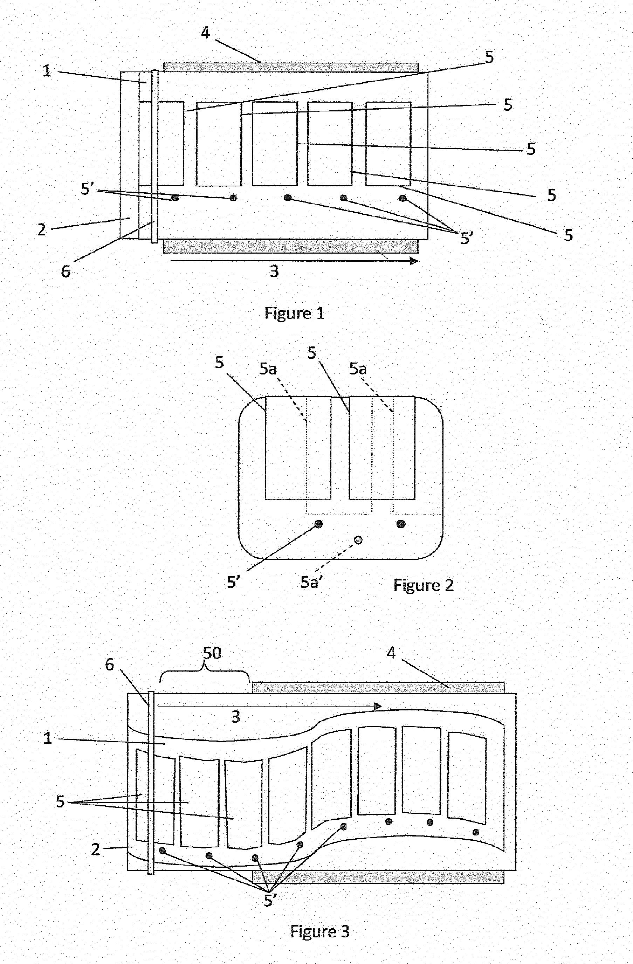

Embodiments of the present invention will now be described by way of example only and with reference to the accompanying drawings of which Figures 1 and 2 illustrate a machine currently marketed by Golden Laser Co Ltd and are for comparison purposes only.

Referring first to Figures 1 and 2, the known cutting machine is a numerically controlled laser cutter for cutting individual panels from a continuous roll of flexible pre-printed material such as fabric. The fabric 1 is initially wound on a roll 2 and is withdrawn from the roll 2 in the fabric withdrawal direction illustrated by arrow 3 and onto a cutting table 4. The cutting table 4 is the top surface of a conveyor which is perforated so that air suction from below the cutting table 4 draws the fabric on the table into close flat contact with the table surface for precise handling of the fabric. Figure 1 shows a simple row of rectangular shapes 5 pre-printed on the fabric, representing the shapes to be cut out during operation of the machine. Alongside those shapes 5 there is a row of pre-printed alignment marks 5' each in a fixed alignment relative to the pre-printed shapes 5, the function of which will be described below.

As the fabric 1 is withdrawn from its roll 2 it passes beneath a camera or cameras 6 which look down on the advancing fabric and photograph the pattern printed on the fabric. That pattern comprises shape data, in the form of the shapes 5, and alignment data, in the form of the alignment marks 5'. Before cutting can commence, the machine must be stopped and an operator must consult the photographed images on a computer screen as illustrated in Figure 2. On that screen the shapes 5 and alignment marks 5' of a portion of the fabric are shown. Also displayed on the screen is a representation, to the same scale, of cutting command data 5a (shown for comparison in broken line) and alignment data 5a' which have been pre-programmed into the machine when the fabric roll 2 was selected. The cutting command data 5a correspond to the shapes to be cut from the fabric, but as can clearly be seen in Figure 2 the cutting command data 5a is out of alignment with the shapes 5 printed on the fabric 1. If cutting were to commence with this misalignment, then each piece of fabric cut from the roll 2 would fail to correspond to the printed pattern on the fabric. The operator must therefore, using a computer mouse, move the alignment data 5a' directly over the alignment marks 5a on the screen. Then with a simple mouse click the cutting command data 5' is adjusted and aligned to establish close alignment between the cuts to be created by the laser head of the machine and the outlines 5 pre-printed on the fabric 1. This manual alignment can be carried out in less than five seconds, but if the fabric is stretched or distorted then the alignment is not maintained as more fabric 1 is drawn from the roll 2 and passed to the cutting table 4. It must therefore be repeated periodically during use of the machine, and the cutting action of the laser head must be halted during each manual realignment. The cutting action of the Golden Laser Co Ltd machine is therefore intermittent, with frequent interruptions (potentially as many as one for each cutting table length of fabric 1), which slows down production. Also, the Golden Laser Co Ltd machine requires the pre-loading of cutting command data to match the selection of the fabric roll 2. Different rolls 2 have different cutting requirements, and it is important that the cutting command data is the correct data chosen for each roll 2. For that reason the Golden Laser Co Ltd machine is most suitably used in a combined print and cutting operation, where fabric is printed using vectors to control a print head and is then fed directly to the cutting machine where the same vectors are used to create the cutting command data.

Figure 3 shows how the same sequence of rectangular shapes is cut using a machine according to the invention. Elements of the machine which correspond to the elements of Figure 1 are given the same reference numerals. In Figure 3, however, the one or more cameras or optical sensors 6 are placed considerably upstream of the cutting table 4, separated by a zone 50 which is the cutting command computing zone. The perforated conveyor which transports the fabric from the reservoir roll 2 to the cutting table 4 extends from the fabric roll 2, beneath the camera or cameras 6 and continuously through the cutting command computing zone to the discharge end of the cutting table 4. The fabric 1 is therefore held closely against the moving surface of the perforated conveyor, but any stretching or other distortion of the fabric 1 as it is first gripped by the air flow through the perforated conveyor is maintained along the length of the conveyor. Figure 3 shows, in exaggerated detail for illustrative purposes, how the fabric 1 can be distorted into a sinuous shape on the conveyor. Such a shape would be created by slight movement of the fabric roll 2 from side to side as the fabric 1 is withdrawn from the roll and first reaches the perforated conveyor 4.

The cutting machine of Figure 3 has several very important advantages over that of Figure 1. In the first place the alignment step with the cutting head disabled, as illustrated in Figure 2, is not necessary in the machine of Figure 3. The cutting action can therefore run continuously and without interruption. That is an important advantage in increasing machine throughput. In the second place because the camera or cameras 6 in Figure 3 identify either continuous line data or alignment data from the designs printed on the fabric 1 on the perforated conveyor 4, there need be no pre-programmed cutting data in the cutting machine when the fabric 1 is first drawn from the roll 2. While the fabric 1 is passing through the cutting command computing zone 50 the continuous line data printed on the fabric 1 is then first identified, then from that identification the shape and position of closed loop shapes printed on the fabric 1 are identified; and finally cutting command data are derived to match in precise shape and location the closed loop shapes pre-printed on the fabric 1. Any variations in the outline shapes or positions of the closed loop shapes printed on the fabric 1, being variations caused by stretching or distortion of the fabric since the original printing, are automatically closely followed by the cutting command data because that cutting command data reflects precisely the lines as they appear beneath the camera or cameras. When the cut pieces are discharged from the cutting machine it is therefore found that they revert to their original undistorted shape, and the cut lines follow precisely the shapes of the printed matter on the fabric 1.

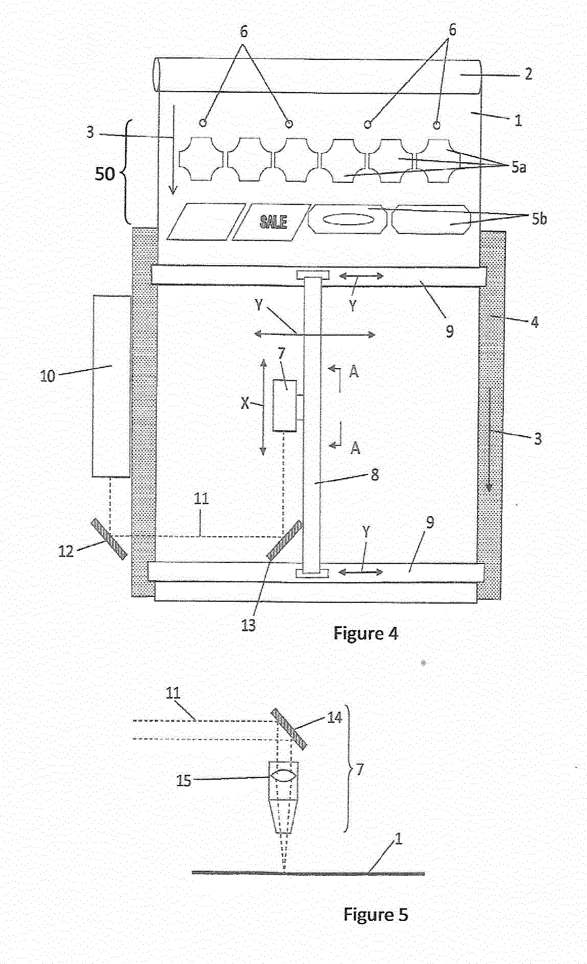

Figure 4 is another plan view of the cutting machine of the invention, this time with rather more detail than Figure 3. Figure 4 shows two rows of shapes 5a and 5b pre-printed on the fabric 1. It is purely for ease of illustration that further shapes are not shown in Figure 4 on the advance portion of the fabric 1 which lies over the cutting table 4. Of course, it would normally be the case that the entire surface of the fabric would be pre-printed with such outline shapes to be cut out from the advancing fabric. The shapes may be regular repeating shapes, as illustrated in row 5a, or may be different shapes, as illustrated in row 5b.

The fabric 1 is initially wound on a roll 2 which creates the fabric reservoir. The fabric 1 is withdrawn from the roll 2 by a stepping motor which rotates the roll 2 in the fabric withdrawal direction illustrated by arrow 3 in response to sensor means (not shown) which monitors the fabric movement to maintain the withdrawal speed at precisely the speed of a conveyor table 4. The conveyor table 4 is the cutting table of the laser cutter, and is the top surface of any suitable conveyor such as a belt conveyor or a slatted conveyor, and is preferably perforated so that air suction from below the conveyor table 4 draws the fabric on the table into close flat contact with the table surface for precise handling of the fabric. Although not illustrated in Figure 1 or Figure 2, the roll 2 may be laterally movable to keep the unrolling fabric 1 in precise alignment with the conveyor table, to avoid any creasing or wrinkling of the withdrawn fabric on its way to the table 4. That lateral movement of the roll 2 does, however, give rise to the possibility of an elastic sheet material such as a fabric following a sinuous path as it is drawn onto the conveyor table 4, as illustrated in Figure 3. As the fabric 1 is taken from the roll 2 the cutting machine need have no pre-programmed data identifying either the shapes printed on the fabric or the cutting data necessary to cut those shapes from the fabric.

The fabric movement is in the forward direction 3 only. As the fabric advances towards the cutting table 4 it passes beneath a row of cameras 6. Four such cameras 6 are illustrated in Figure 4, but the number is immaterial. What is important is that their viewing angle is sufficient that the entire width of fabric is visible. Where more than one camera is used, as in Figure 4, the combined image data captured by the cameras 6 is stitched together to create a single scan of the entire fabric width. Initially the cameras process the captured image data to identify continuous lines printed on the fabric 1. If necessary, image enhancement algorithms may be used to improve the clear identification of those sensed continuous lines. Further processing is then used as the fabric 1 passes through the cutting command computing zone 50, to identify whenever those identified lines form closed loop shapes, as do all of the shapes in row 5a. All other image data is discarded. Finally as the fabric 1 continues to pass through the cutting command computing zone 50 that data identifying the closed loop shapes is further processed into cutting command data for the laser cutter, so that when the shapes are over the cutting table 4 in the cutting zone, a laser cutting head 7 is controlled to cut along the detected lines to separate from the fabric 1 the individual detected shapes.

Of the printed shapes to be cut from the sheet material, Figure 4 shows two alternatives in row 5b. In one of the parallelogram shapes the word "SALE" appears. That is to illustrate a potential banner or point-of-sale flag which might be cut from the sheet material. If such an item were to be cut from the sheet material 1 then it would no doubt be desirable that the laser cutting head should ignore the actual lettering and cut only around the outside of the parallelogram. To achieve that result, the further processing of the data identifying the parallelogram closed loop shape should follow an algorithm that ignores any continuous line data identified as lying within an outer closed path outline, namely the parallelogram shown by way of example in Figure 4. Thus, only the outer closed loop shape would be converted into cutting command date for the laser cutter. Another alternative illustrated in row 5b of Figure 4 is an octagonal outer closed loop shape which has within its outline an ellipse. For some end uses of the cut sheet material it would be desirable for the ellipse to be cut together with the outer octagon. For example, the sheet material might be fabric and the printed shapes might be the outlines of panels to be cut from the fabric for making up into garments or footwear. For such an intended end use, the algorithm under which the data identifying the closed loop shapes is converted into cutting command data should not ignore any continuous line data identified as lying within the outer closed path outline and should instead generate cutting command data which cuts around all identifiable closed loop shapes. The intended garment panel (shown in Figure 4 as an octagon purely by way of example) would then be cut from the fabric together with the central cut-away ellipse. It is feasible that a command code specifying which algorithm is appropriate for the intended end use could be printed on the fabric, possibly in a margin where it would not be confused with a cutting pattern; or alternatively the operator of the machine could choose between which of the two algorithms to use.

The laser cutting head 7 illustrated in Figures 4 and 5 is mounted on a guide rail 8 and is movable reciprocally along the rail 8 in response to an X direction component of the cutting command data. That guide rail 8 itself is mounted on a pair of guide rails 9 and is movable reciprocally along the rails 9 in response to a Y direction component of the cutting command data, so that combined movement of the laser cutting head 7 and the guide rail 8 enables the cutting head to trace the outline of the detected shapes. The X and Y directions of movement are indicated by double-headed arrows X and Y in Figure 4. The laser itself is illustrated schematically with the reference 10, with the laser beam showing as a broken line 11. That laser beam is reflected by two fixed mirrors 12 and 13 each at 45 degrees to the laser beam path, to reflect the beam 11 onto a third mirror 14 carried on the cutting head 7. A focussing lens 15 on the cutting head 7 then focuses the laser beam onto the fabric 1 on the cutting table 4.

As the cut pieces of the sheet material progress beyond the cutting table 4, they may be allowed to fall into collection baskets (not illustrated) or passed to another conveyor for presenting the cut pieces to an operator or robot downstream to be picked from that conveyor and sorted for further processing. The speed of feeding the sheet material in the direction of the arrow 3 is preferably varied to match the optimum cutting speed, so that there is a constant and uninterrupted passage of the sheet material though the machine.

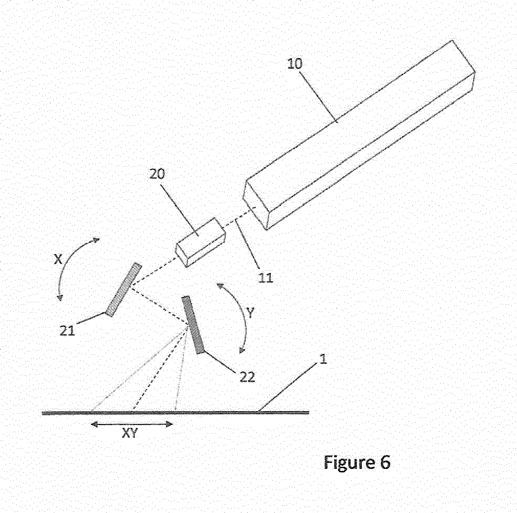

There are a number of advantages deriving from the machine of the invention and its method of operation. Clearly one prime advantage is the ability of the laser cutter to cut around any closed loop pattern printed on the sheet material even though when the sheet material is first loaded into the cutting machine the laser cutter may be devoid of any information or programming data indicating the shape and location of the shapes to be cut. Speed of operation is another important advantage. Cutting speeds are generally far faster than printing speeds, so the cutting is not slowed down by first having to print the fabric, as in US-A-9868302 and WO-A-2019/012566. The sheet material may have been printed by any printing method, including sublimation print transfer methods, whereas the printing demanded by US-A-9868302 and WO-A-2019/012566 must be line by line printing using a scanning print head. Cutting of the pre-printed sheet material can be continuous, unlike US-A-5614115 which requires a pause while the fabric direction of movement is reversed and unlike the Golden Laser Co Ltd machine which requires cessation of the cutting action while the operator manually adjusts the alignment. Indeed, the pace of throughput of the sheet material through the machine is governed only by the cutting speed. The speed of a laser cutter can be increased beyond the speed achievable according to Figures 4 and 5 by using a galvo mirror cutting head mounted over the cutting table in place of the mirrors 12 and 13, the cutting head 7 and the rails 8 and 9 of Figure 1. Such a galvo mirror cutting head is illustrated schematically in Figure 6. In that Figure the laser is again given the reference number 10, but the laser beam 11 is passed first through a dynamic focussing and collimating lens 20 and then reflected by pivotable mirrors 21 and 22. The pivotal axes of the two mirrors are mutually perpendicular, providing pivotal mirror movements to move the laser focus point in the X and Y directions. That pivoting movement of the two mirrors 21 and 22 is illustrated by double-headed arrows X and Y, resulting in a final range of movement of the focus point of the laser beam 11 indicated schematically by the double-headed arrow XY. The pivoting movement of the mirrors, under the control of the cutting command data, can move the point of focus of the laser beam over the sheet material on the cutting table far more rapidly than the sliding cutting head control of Figures 4 and 5, so significantly faster throughput of the sheet material is possible. Of course, the throughput through the machine of Figures 4 and 5 or the machine of Figure 6 can be increased even further by having more than one cutting head in each machine, so that more than one closed loop shape can be cut from the sheet material simultaneously.

Although exemplary embodiments have been described in the preceding paragraphs, it should be understood that various modifications may be made to those embodiments without departing from the scope of the appended claims. Thus, the breadth and scope of the claims should not be limited to the above-described exemplary embodiments.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A method of programming and operating a numerically controlled cutting machine to cause it to cut out shapes from a sheet material (1) in alignment with designs, including continuous line data, that have been pre-printed on that sheet material (1), which method comprises:
moving the sheet material (1) from a reservoir (2) of the pre-printed sheet material in a forward direction (3) past one or more cameras or optical sensors (6) and then over a cutting table (4) where the shapes are to be cut;
using the one or more cameras or optical sensors (6) to detect data pre-printed on the sheet material (1) as it moves towards the cutting table (4);
using only the detected data to calculate new cutting command data, thereby creating aligned cutting command data that is aligned with the data pre-printed on the sheet material (1); and
using the aligned cutting command data to cut shapes from the printed sheet material (1) on the cutting table (4);
**CHARACTERISED IN THAT** the sheet material (1) is passed through a cutting command computing zone (50) between the one or more cameras or optical sensors (6) and the cutting table (4), and **in that** cutting command computing zone (50) the cutting command data is calculated or modified to derive the aligned cutting command data which establishes and maintains close alignment, when the sheet material (1) reaches the cutting table (4), between the shapes to be cut and the data pre-printed on the sheet material (1).

2. A method according to claim 1, wherein the aligned cutting command data is established while the sheet material (1) is passing through the cutting command computing zone (50) by a sequence of:
identifying the continuous line data from the data detected by the one or more cameras or optical sensors (6),
identifying, from that continuous line data, the shape and position of closed loop shapes pre-printed on the sheet material (1); and
deriving cutting command data matching, in shape and location, the identified closed loop shapes pre-printed on the sheet material (1);
and wherein that derived aligned cutting command data is transferred to the cutting machine to cause the machine to cut the identified closed loop shapes from the sheet material (1) when the sheet material (1) subsequently passes over the cutting table (4), maintaining close alignment between the shapes being cut and the data pre-printed on the sheet material (1).

3. A method according to claim 2, wherein the data processing step comprises ignoring any closed loop shapes contained within the boundaries of other larger closed loop shapes.

4. A method according to claim 2, wherein the data processing step comprises identifying closed loop shapes even when they are contained within the boundaries of other larger closed loop shapes.

5. A method according to any preceding claim, wherein the sheet material (1) is a flexible sheet material and the reservoir (2) is a roll from which the sheet material (1) is drawn and moved constantly in the forward direction (3) towards and over the cutting table (4).

6. A method according to any preceding claim, wherein the sheet material (1) is transported through the cutting command computing zone (50) and over the cutting table (4) by a perforated conveyor against which the sheet material (1) is held firmly by air suction.

7. A numerically controlled cutting machine, comprising:
means for moving sheet material (1) from a reservoir (2) of pre-printed sheet material in a constant forward direction (3) towards and over a cutting table (4);
one or more cameras or optical sensors (6) located directly over the sheet material (1) as it passes from the reservoir (2) towards the cutting table (4);
means for using the one or more cameras or optical sensors (6) to detect data pre-printed on the sheet material (1);
means for using only the detected data to calculate cutting command data, aligned with the data pre-printed on the sheet material (1); and
means for using the aligned cutting command data to cut shapes from the printed sheet material (1) on the cutting table (4);
**CHARACTERIZED IN THAT**
the one or more cameras or optical sensors (6) are positioned upstream of the cutting table (4) relative to the forward movement of the sheet material (1) and separated from the cutting table (4) in the direction (3) of forward movement by a cutting command computing zone (50); and
the means for using the detected data to calculate the cutting command data is programmed to carry out that calculation as the sheet material (1) passes through the cutting command computing zone (50) without interruption of the cutting of the shapes from the sheet material (1) already on the cutting table (4).

8. A machine according to claim 7, comprising means for calculating the cutting command data while the sheet material (1) is passing through the cutting command computing zone (50) by a sequence of:
(a) identifying continuous line data from the data detected by the output of the one or more cameras or optical sensors (6); and
(b) processing the continuous line data to identify the shape and position of closed loop shapes pre-printed on the sheet material (1), and
(c) deriving aligned cutting command data aligned to match the identified closed loop shapes pre-printed on the sheet material (1).

9. A machine according to claim 7 or claim 8, wherein the cutting head is a laser cutting head.

10. A machine according to claim 7 or claim 8, wherein the cutting head is a mirror and laser beam focussing head mounted on a rail over the cutting table (4) so as to be reciprocally slidable in an X direction along that rail, the rail itself being mounted between a pair of rails over the cutting table (4) so as to be reciprocally slidable in a Y direction along those rails, further comprising means for driving the cutting head effective to cause reciprocal sliding of the cutting head in the X and Y directions in response to the derived cutting command data to cause the cutting head to follow the shapes printed on the sheet material (1).

11. A machine according to claim 7 or claim 8, wherein the cutting head is a laser beam galvo mirror cutting head mounted over the cutting table (4), including a pair of mirrors capable of pivoting in an oscillating manner about mutually perpendicular pivotal axes, further comprising means for driving the cutting head effective to cause a focus point of the laser beam to move in X and Y directions over the surface of the sheet material (1) on the cutting table (4) to follow the shapes printed on the sheet material (1).

12. A machine according to any of claims 7 to 11, wherein the means for moving the sheet material (1) is a perforated conveyor, and air suction through the perforations in the conveyor serves to draw the sheet material (1) down against the top span of the conveyor to hold it firmly on conveyor during movement of the sheet material (1) through the cutting command computing zone (50) and over the cutting table (4) during the cutting out of the shapes.

13. A machine according to any of claims 7 to 12, wherein the reservoir (2) comprises means for mounting a roll of the sheet material (1) which is a flexible sheet material, means for withdrawing the sheet material (1) from the roll and means for laterally moving the roll to maintain a smooth and unwrinkled presentation of the sheet material (1) to the cutting table (4) as the sheet material (1) is withdrawn from the roll.

## Patentansprüche

1. Verfahren zum Programmieren und Betreiben einer numerisch gesteuerten Schneidemaschine, um sie zu veranlassen, Formen aus einem Blattmaterial (1) in Übereinstimmung mit Designs, einschließlich fortlaufender Liniendaten, auszuschneiden, welche auf diesem Blattmaterial (1) vorgedruckt wurden, wobei das Verfahren umfasst:
Bewegen des Blattmaterials (1) aus einem Vorratsbehälter (2) des vorgedruckten Blattmaterials in einer Vorwärtsrichtung (3) an einer oder mehreren Kameras oder optischen Sensoren (6) vorbei und dann über einen Schneidetisch (4), wo die Formen geschnitten werden sollen;
Verwenden der einen oder mehreren Kameras oder optischen Sensoren (6), um auf dem Blattmaterial (1) vorgedruckte Daten zu erfassen, während es sich in Richtung des Schneidetisches (4) bewegt;
Verwenden nur der erfassten Daten, um neue Schneidebefehlsdaten zu berechnen, dadurch Erstellen von ausgerichteten Schneidebefehlsdaten, welche mit den auf dem Blattmaterial (1) vorgedruckten Daten ausgerichtet sind; und
Verwenden der ausgerichteten Schneidebefehlsdaten zum Ausschneiden von Formen aus dem bedruckten Blattmaterial (1) auf dem Schneidetisch (4);
**DADURCH GEKENNZEICHNET, DASS** das Blattmaterial (1) durch eine Schneidebefehlsberechnungszone (50) zwischen der einen oder den mehreren Kameras oder optischen Sensoren (6) und dem Schneidetisch (4) geführt wird, und dass in der Schneidebefehlsberechnungszone (50) die Schneidebefehlsdaten berechnet oder geändert werden, um die ausgerichteten Schneidebefehlsdaten abzuleiten, sodass eine enge Ausrichtung zwischen den zu schneidenden Formen und den auf dem Blattmaterial (1) vorgedruckten Daten hergestellt und aufrechterhalten wird, wenn das Blattmaterial (1) den Schneidetisch (4) erreicht.

2. Verfahren nach Anspruch 1, wobei die ausgerichteten Schneidebefehlsdaten erstellt werden, während das Blattmaterial (1) durch die Schneidebefehlsberechnungszone (50) läuft, durch eine Folge von:
Identifizieren der fortlaufenden Liniendaten aus den durch die eine oder mehreren Kameras oder optischen Sensoren (6) erfassten Daten,
Identifizieren der Form und Position von geschlossenen Schleifenformen, welche auf dem Blattmaterial (1) vorgedruckt sind, anhand dieser fortlaufenden Liniendaten; und
Ableiten von Schneidebefehlsdaten, welche in Form und Lage mit den identifizierten geschlossenen Schleifenformen übereinstimmen, welche auf dem Blattmaterial (1) vorgedruckt sind;
und wobei die abgeleiteten ausgerichteten Schneidebefehlsdaten an die Schneidemaschine übertragen werden, um zu veranlassen, dass die Maschine die identifizierten geschlossenen Schleifenformen aus dem Blattmaterial (1) schneidet, wenn das Blattmaterial (1) anschließend über den Schneidetisch (4) läuft, wobei eine enge Ausrichtung zwischen den zu schneidenden Formen und den auf dem Blattmaterial (1) vorgedruckten Daten aufrechterhalten wird.

3. Verfahren nach Anspruch 2, wobei der Datenverarbeitungsschritt Ignorieren aller geschlossenen Schleifenformen umfasst, welche innerhalb der Grenzen anderer größerer geschlossener Schleifenformen enthalten sind.

4. Verfahren nach Anspruch 2, wobei der Datenverarbeitungsschritt Identifizieren von geschlossenen Schleifenformen umfasst, selbst wenn sie innerhalb der Grenzen anderer größerer geschlossener Schleifenformen enthalten sind.

5. Verfahren nach einem der vorstehenden Ansprüche, wobei das Blattmaterial (1) ein flexibles Blattmaterial ist und der Vorratsbehälter (2) eine Rolle ist, von welcher das Blattmaterial (1) abgezogen und ständig in Vorwärtsrichtung (3) zu dem und über den Schneidetisch (4) bewegt wird.

6. Verfahren nach einem der vorstehenden Ansprüche, wobei das Blattmaterial (1) durch die Schneidebefehlsberechnungszone (50) und über den Schneidetisch (4) durch einen perforierten Förderer transportiert wird, gegen welchen das Blattmaterial (1) durch Luftansaugung festgehalten wird.

7. Numerisch gesteuerte Schneidemaschine, umfassend:
Mittel zum Bewegen von Blattmaterial (1) aus einem Vorratsbehälter (2) mit vorgedrucktem Blattmaterial in einer konstanten Vorwärtsrichtung (3) zu einem und über einen Schneidetisch (4);
eine oder mehrere Kameras oder optische Sensoren (6), welche direkt über dem Blattmaterial (1) angeordnet sind, während es von dem Vorratsbehälter (2) zu dem Schneidetisch (4) gelangt;
Mittel zum Verwenden der einen oder mehreren Kameras oder optischen Sensoren (6), um auf dem Blattmaterial (1) vorgedruckte Daten zu erfassen;
Mittel zum Verwenden nur der erfassten Daten, um Schneidebefehlsdaten zu berechnen, welche mit den auf dem Blattmaterial (1) vorgedruckten Daten ausgerichtet sind; und
Mittel zum Verwenden der ausgerichteten Schneidebefehlsdaten zum Ausschneiden von Formen aus dem bedruckten Blattmaterial (1) auf dem Schneidetisch (4);
**DADURCH GEKENNZEICHNET, DASS**
die eine oder mehreren Kameras oder optischen Sensoren (6) relativ zu der Vorwärtsbewegung des Blattmaterials (1) vor dem Schneidetisch (4) positioniert und in der Vorwärtsrichtung (3) von dem Schneidetisch (4) durch eine Schneidebefehlsberechnungszone (50) getrennt sind; und
die Mittel zum Verwenden der erfassten Daten zum Berechnen der Schneidebefehlsdaten so programmiert sind, dass sie diese Berechnung durchführen, während das Blattmaterial (1) durch die Schneidebefehlsberechnungszone (50) läuft, ohne dass das Schneiden der Formen aus dem Blattmaterial (1), welches sich bereits auf dem Schneidetisch (4) befindet, unterbrochen wird.

8. Maschine nach Anspruch 7, umfassend Mittel zum Berechnen der Schneidebefehlsdaten, während das Blattmaterial (1) durch die Schneidebefehlsberechnungszone (50) läuft, durch eine Folge von:
(a) Identifizieren fortlaufender Liniendaten aus den durch die Ausgabe der einen oder mehreren Kameras oder optischen Sensoren (6) erfassten Daten; und
(b) Verarbeiten der fortlaufenden Liniendaten, um die Form und Position von geschlossenen Schleifenformen zu identifizieren, welche auf dem Blattmaterial (1) vorgedruckt sind, und
(c) Ableiten von ausgerichteten Schneidebefehlsdaten, welche so ausgerichtet sind, dass sie mit den identifizierten geschlossenen Schleifenformen übereinstimmen, welche auf dem Blattmaterial vorgedruckt sind (1).

9. Maschine nach Anspruch 7 oder Anspruch 8, wobei der Schneidekopf ein Laserschneidekopf ist.

10. Maschine nach Anspruch 7 oder Anspruch 8, wobei der Schneidekopf ein Spiegel-und Laserstrahl-Fokussierkopf ist, welcher auf einer Schiene über dem Schneidetisch (4) montiert ist, so dass er in X-Richtung entlang dieser Schiene hin und her verschiebbar ist, wobei die Schiene selbst zwischen einem Paar Schienen über dem Schneidetisch (4) montiert ist, sodass sie entlang dieser Schienen in Y-Richtung hin und her verschiebbar ist, weiter umfassend Mittel zum Antreiben des Schneidekopfs, welche wirksam sind, um ein Hin- und Herverschieben des Schneidekopfs in X- und Y-Richtung als Reaktion auf die abgeleiteten Schneidebefehlsdaten zu bewirken, um den Schneidekopf zu veranlassen, den auf dem Blattmaterial (1) gedruckten Formen zu folgen.

11. Maschine nach Anspruch 7 oder Anspruch 8, wobei der Schneidekopf ein Laserstrahl-Galvo-Spiegel-Schneidekopf ist, welcher über dem Schneidetisch (4) montiert ist und ein Paar Spiegel einschließt, welche in einer oszillierenden Weise um zueinander senkrechte Schwenkachsen schwenken können, weiter umfassend Mittel zum Antreiben des Schneidekopfes, um zu bewirken, dass sich ein Fokuspunkt des Laserstrahls in X- und Y-Richtung über die Oberfläche des Blattmaterials (1) auf dem Schneidetisch (4) bewegt, um den auf dem Blattmaterial (1) gedruckten Formen zu folgen.

12. Maschine nach einem der Ansprüche 7 bis 11, wobei das Mittel zum Bewegen des Blattmaterials (1) ein perforierter Förderer ist und die Luftansaugung durch die Perforationen in dem Förderer dazu dient, das Blattmaterial (1) nach unten gegen die obere Spannweite des Förderers zu ziehen, um es während der Bewegung des Blattmaterials (1) durch die Schneidebefehlsberechnungszone (50) und über den Schneidetisch (4) während des Ausschneidens der Formen fest auf dem Förderer zu halten.

13. Maschine nach einem der Ansprüche 7 bis 12, wobei der Vorratsbehälter (2) Mittel zum Anbringen einer Rolle des Blattmaterials (1), bei welchem es sich um ein flexibles Blattmaterial handelt, Mittel zum Abziehen des Blattmaterials (1) von der Rolle und Mittel zum seitlichen Bewegen der Rolle umfasst, um eine glatte und faltenfreie Präsentation des Blattmaterials (1) auf dem Schneidetisch (4) aufrechtzuerhalten, wenn das Blattmaterial (1) von der Rolle abgezogen wird.

## Revendications

1. Procédé de programmation et de fonctionnement d'une machine à découper à commande numérique pour qu'elle découpe des formes à partir d'un matériau en feuille (1) en alignement avec des conceptions, incluant des données de ligne continue, qui ont été pré-imprimées sur ce matériau en feuille (1), lequel procédé comprenant :
le déplacement du matériau en feuille (1) à partir d'un réservoir (2) du matériau en feuille préimprimé dans une direction vers l'avant (3) devant une ou plusieurs caméras ou un ou plusieurs capteurs optiques (6) et, ensuite, au-dessus d'une table de découpe (4) sur laquelle les formes doivent être découpées ;
l'utilisation des une ou plusieurs caméras ou des un ou plusieurs capteurs optiques (6) pour détecter des données préimprimées sur le matériau en feuille (1) au fur et à mesure qu'il se déplace vers la table de découpe (4) ;
l'utilisation uniquement des données détectées pour calculer de nouvelles données de commande de découpe, ce qui permet de créer des données de commande de découpe alignées qui sont alignées sur les données préimprimées sur le matériau en feuille (1) ; et
l'utilisation des données de commande de découpe alignées pour découper des formes à partir du matériau en feuille imprimé (1) sur la table de découpe (4) ;
**CARACTÉRISÉ EN CE QUE** le matériau en feuille (1) est passé à travers une zone de calcul de commande de découpe (50) entre les une ou plusieurs caméras ou les un ou plusieurs capteurs optiques (6) et la table de découpe (4), et dans cette zone de calcul de commande de découpe (50), les données de commande de découpe sont calculées ou modifiées pour dériver les données de commande de découpe alignées qui établissent et maintiennent un alignement étroit, lorsque le matériau en feuille (1) atteint la table de découpe (4), entre les formes à découper et les données préimprimées sur le matériau en feuille (1).

2. Procédé selon la revendication 1, dans lequel les données de commande de découpe alignées sont établies pendant que le matériau en feuille (1) passe à travers la zone de calcul de commande de découpe (50) par une séquence :
d'identification des données de ligne continue à partir des données détectées par les une ou plusieurs caméras ou les un ou plusieurs capteurs optiques (6),
d'identification, à partir de ces données de ligne continue, de la forme et de la position de formes en boucle fermée préimprimées sur le matériau en feuille (1) ; et
de dérivation de données de commande de découpe correspondant, en forme et emplacement, aux formes en boucle fermée identifiées préimprimées sur le matériau en feuille (1) ;
et dans lequel des données de commande de découpe alignées dérivées sont transférées à la machine à découper pour amener la machine à découper les formes en boucle fermée identifiées à partir du matériau en feuille (1) lorsque le matériau en feuille (1) passe, par la suite, au-dessus de la table de découpe (4), en maintenant un alignement étroit entre les formes qui sont découpées et les données préimprimées sur le matériau en feuille (1).

3. Procédé selon la revendication 2, dans lequel l'étape de traitement de données comprend la non-prise en compte de toutes formes en boucle fermée contenues dans les limites d'autres formes en boucle fermée plus grandes.

4. Procédé selon la revendication 2, dans lequel l'étape de traitement de données comprend l'identification de formes en boucle fermée même lorsqu'elles sont contenues dans les limites d'autres formes en boucle fermée plus grandes.

5. Procédé selon une quelconque revendication précédente, dans lequel le matériau en feuille (1) est un matériau en feuille flexible et le réservoir (2) est un rouleau à partir duquel le matériau en feuille (1) est tiré et déplacé de manière constante dans la direction vers l'avant (3) vers la table de découpe (4) et au-dessus de celle-ci.

6. Procédé selon une quelconque revendication précédente, dans lequel le matériau en feuille (1) est transporté à travers la zone de calcul de commande de découpe (50) et au-dessus de la table de découpe (4) par un convoyeur perforé contre lequel le matériau en feuille (1) est maintenu fermement par aspiration d'air.

7. Machine à découper à commande numérique, comprenant :
des moyens pour déplacer un matériau en feuille (1) depuis un réservoir (2) de matériau en feuille préimprimé dans une direction constante vers l'avant (3) vers une table de découpe (4) et au-dessus de celle-ci ;
une ou plusieurs caméras ou un ou plusieurs capteurs optiques (6) situés directement au-dessus du matériau en feuille (1) au fur et à mesure qu'il passe du réservoir (2) vers la table de découpe (4) ;
des moyens pour utiliser les une ou plusieurs caméras ou les un ou plusieurs capteurs optiques (6) pour détecter des données préimprimées sur le matériau en feuille (1) ;
des moyens pour utiliser uniquement les données détectées pour calculer des données de commande de découpe, alignées sur les données préimprimées sur le matériau en feuille (1) ; et
des moyens pour utiliser les données de commande de découpe alignées pour découper des formes à partir du matériau en feuille imprimé (1) sur la table de découpe (4) ;
**CARACTÉRISÉE EN CE QUE**
les une ou plusieurs caméras ou les un ou plusieurs capteurs optiques (6) sont positionnés en amont de la table de découpe (4) par rapport au mouvement vers l'avant du matériau en feuille (1) et séparés de la table de découpe (4) dans la direction (3) de déplacement vers l'avant par une zone de calcul de commande de découpe (50) ; et
les moyens pour utiliser les données détectées pour calculer les données de commande de découpe sont programmés pour effectuer ce calcul au fur et à mesure que le matériau en feuille (1) passe à travers la zone de calcul de commande de découpe (50) sans interruption de la découpe des formes à partir du matériau en feuille (1) déjà sur la table de découpe (4).

8. Machine selon la revendication 7, comprenant des moyens pour calculer les données de commande de découpe pendant que le matériau en feuille (1) passe à travers la zone de calcul de commande de découpe (50) par une séquence :
(a) d'identification de données de ligne continue à partir des données détectées par la sortie des une ou plusieurs caméras ou des un ou plusieurs capteurs optiques (6) ; et
(b) de traitement des données de ligne continue pour identifier la forme et la position des formes en boucle fermée préimprimées sur le matériau en feuille (1), et
(c) de dérivation de données de commande de découpe alignées qui sont alignées pour correspondre aux formes en boucle fermée identifiées préimprimées sur le matériau en feuille (1).

9. Machine selon la revendication 7 ou la revendication 8, dans laquelle la tête de découpe est une tête de découpe laser.

10. Machine selon la revendication 7 ou la revendication 8, dans laquelle la tête de découpe est une tête de focalisation de faisceau laser et de miroir montée sur un rail au-dessus de la table de découpe (4) de manière à pouvoir coulisser en va-et-vient dans une direction X le long de ce rail, le rail lui-même étant monté entre une paire de rails au-dessus de la table de découpe (4) de manière à pouvoir coulisser en va-et-vient dans une direction Y le long de ces rails, comprenant en outre des moyens pour entraîner la tête de découpe efficaces pour provoquer un coulissement en va-et-vient de la tête de découpe dans les directions X et Y en réponse aux données de commande de découpe dérivées pour amener la tête de découpe à suivre les formes imprimées sur le matériau en feuille (1).

11. Machine selon la revendication 7 ou la revendication 8, dans laquelle la tête de découpe est une tête de découpe à miroirs galvanométriques à faisceau laser montée au-dessus de la table de découpe (4), incluant une paire de miroirs capables de pivoter de manière oscillante autour d'axes de pivotement mutuellement perpendiculaires, comprenant en outre des moyens pour entraîner la tête de découpe efficaces pour amener un point focal du faisceau laser à se déplacer dans les directions X et Y au-dessus de la surface du matériau en feuille (1) sur la table de découpe (4) pour suivre les formes imprimées sur le matériau en feuille (1).

12. Machine selon l'une quelconque des revendications 7 à 11, dans laquelle le moyen pour déplacer le matériau en feuille (1) est un convoyeur perforé, et une aspiration d'air à travers les perforations du convoyeur sert à attirer le matériau en feuille (1) vers le bas contre la travée supérieure du convoyeur pour le maintenir fermement sur le convoyeur pendant le déplacement du matériau en feuille (1) à travers la zone de calcul de commande de découpe (50) et au-dessus de la table de découpe (4) pendant la découpe des formes.

13. Machine selon l'une quelconque des revendications 7 à 12, dans laquelle le réservoir (2) comprend des moyens pour monter un rouleau du matériau en feuille (1) qui est un matériau en feuille flexible, des moyens pour retirer le matériau en feuille (1) du rouleau et des moyens pour déplacer latéralement le rouleau pour maintenir une présentation lisse et sans plis du matériau en feuille (1) sur la table de découpe (4) au fur et à mesure que le matériau en feuille (1) est retiré du rouleau.
